# FASCICULE DE BREVET EUROPEEN

(11) **EP 1 807 651 B1**
(45) Date de publication et mention de la délivrance du brevet: **14.11.2012**
(21) Numéro de dépôt: 05809220.6
(22) Date de dépôt: 14.10.2005
(51) Int. Cl.: F16L 57/06

(54) **ELEMENT TEXTILE DE PROTECTION D'UN SUPPORT PLASTIQUE**
TEXTILSCHUTZELEMENT FÜR EINE KUNSTSTOFFSTÜTZE
TEXTILE PROTECTION ELEMENT FOR A PLASTIC SUPPORT

(30) Priorité: 15.10.2004 FR 0410956
(43) Date de publication de la demande: 18.07.2007
(73) Titulaire: Federal Mogul Systems Protection, 60800 Crépy-en-Valois (FR)
(72) Inventeur: ANDRIEU, Hubert, F-60800 Crepy-en-Valois (FR); DROMAIN, Lionel, F-60800 Crepy-en-Valois (FR); MIRMAND, Gérard, F-77680 Roissy-en-Brie (FR); BRASSENX, Christophe, F-80500 Cantigny (FR)
(74) Mandataire: Stankoff, Hélène
(86) Numéro de dépôt international: PCT/FR2005/002552
(87) Numéro de publication internationale: WO 2006/042946

(56) Documents cités:
- WO-A-03/042589
- RO-B- 113 874
- US-A- 3 669 157
- US-A- 5 613 522
- US-A- 5 843 542
- US-A1- 2003 034 083

## Description

La présente invention concerne un élément textile de protection d'un support plastique.

Elle concerne plus particulièrement une gaine textile tubulaire destinée à protéger contre l'abrasion des tuyaux plastiques du type tuyau en polyamide.

Ce type de tuyau plastique est utilisé notamment dans les véhicules automobiles pour transporter le carburant du réservoir jusqu'au moteur.

Généralement, les éléments textiles de protection se présente sous la forme d'une gaine textile formant un manchon autour du tuyau en plastique. Cependant, les gaines textiles ont tendance à glisser sur leur support, notamment lorsque celui-ci est en polyamide, matériau particulièrement glissant. Une gaine textile tissée en fibres polyster thermorétractables, selon le préambule de la revendication 1, est connue du document US 5843 542.

La présente invention vise à résoudre le problème ci-dessus et propose un élément textile de protection immobilisable sur un support plastique.

A cet effet, la présente invention concerne une gaine textile tubulaire de protection d'un tuyau plastique.

Selon l'invention, la structure textile est un tricot, comprenant des monofilaments thermorétractables, en polyester ou polyamide, au moins une portion de la structure textile comprenant un fil textile thermocollant.

Grâce à l'utilisation d'un fil textile thermocollant, il est possible, en soumettant la portion de la structure textile à l'action de la chaleur, d'obtenir la fusion du fil thermocollant et le collage de la portion de la structure textile sur le tuyau plastique.

Ainsi, l'élément textile peut être immobilisé sur le support plastique.

En outre, la structure tricotée du textile permet, par son élasticité radiale naturelle, d'appliquer parfaitement le textile sur le support plastique et ainsi d'obtenir un collage efficace lors de la fusion du fil textile.

De préférence, le fil thermocollant est fusible à une température comprise entre 60 et 140°C. En outre, les éléments textiles de protection étant généralement soumis en utilisation à des températures de l'ordre de 125-150°C, le fil thermocollant est de préférence réalisé en un matériau thermodurcissable, présentant ainsi une bonne tenue en température même lorsque l'élément textile est porté à des températures supérieures à la température de fusion du fil textile thermocollant.

A titre d'exemple, le fil thermocollant est du type polyester et/ou polyamide, traditionnellement utilisé en tissage pour réaliser des pièces de tissu thermocollant pour étiquettes ou ourlets.

Afin d'assurer un collage optimal de cette gaine tubulaire, le fil thermocollant est de préférence entrelacé dans la structure textile sur au moins une portion transversale de la gaine tubulaire. La portion thermocollante de l'élément textile s'étend ainsi sur une bande circulaire de la gaine tubulaire.

Dans un mode de réalisation particulièrement pratique, la structure textile est un tricot du type jersey ou un tricot côte.

De préférence, le fil thermocollant est molletonné, permettant de disposer parfaitement le fil thermocollant sur une face de la structure textile tricotée.

D'autres particularités et avantages de l'invention apparaîtront encore dans la description ci-après.

Aux dessins annexés, donnés à titre d'exemples non limitatifs:
- les figures 1 à 3 illustrent schématiquement une structure textile tricotée adaptée à être utilisée dans l'élément textile conforme à un mode de réalisation de l'invention ;
- les figures 4 et 5 illustrent schématiquement en coupe longitudinale une gaine textile de protection d'un tuyau plastique avant et après collage de la gaine.

On va décrire à présent en référence aux figures un mode de réalisation de l'invention.

Dans cet exemple, l'élément textile de protection est une gaine tubulaire.

Bien entendu, cet élément textile de protection pourrait être de n'importe quelle forme dès lors qu'il peut être obtenu par un procédé de fabrication par tricotage.

Dans ce mode de réalisation, l'élément textile de protection mécanique est réalisé par tricotage, du type tricot jersey.

D'autres types de tricotage pourraient être utilisés, par exemple un tricotage côte.

L'utilisation d'une structure tricotée permet d'améliorer l'efficacité du fil fusible. En effet, l'élément textile tricoté présente une certaine élasticité radiale, contrairement par exemple à une structure tissée qui n'a aucune élasticité radiale. Grâce à cette élasticité, le fil fusible est maintenu en contact avec le plastique lors de la fusion de ce fil fusible, améliorant ainsi le collage et la fixation de l'élément textile de protection sur le support plastique.

En outre, les techniques de tricotage permettent, contrairement à une structure tressée par exemple, de positionner la plus grande partie du fil fusible à l'intérieur de l'élément textile, c'est-à-dire sur la face destinée à venir en contact avec le support plastique.

Dans ce mode de réalisation, la gaine textile a pour fonction de protéger mécaniquement un support plastique.

Cette gaine textile de protection mécanique doit présenter ainsi un certain nombre de caractéristiques du fait de son application comme protection mécanique.

Lorsque cette gaine est destinée à protéger un tuyau de circulation de carburant dans un véhicule automobile, elle doit présenter une bonne tenue à l'abrasion, une tenue en température de l'ordre de 125 à 150°C et une bonne tenue au fluide automobile susceptible de migrer au travers du tuyau plastique.

A cet effet, la gaine textile comprend des monofilaments polyester ou polyamide. Le diamètre des monofilaments utilisés dans la structure textile est déterminé en fonction des propriétés mécaniques souhaitées pour l'élément textile, et notamment la résistance souhaitée à l'abrasion.

Ces monofilaments en polyester et polyamide présente en outre l'avantage de se rétracter légèrement lorsqu'ils sont chauffés.

Comme cela sera expliqué ultérieurement, ce retrait en température facilite le montage de la gaine tubulaire sur le tuyau plastique et son immobilisation par collage.

Par ailleurs, lorsque des propriétés acoustiques sont également recherchées pour l'élément textile de protection, la gaine textile peut comporter en outre des multifilaments en PET (poly (éthylène terephthalate)).

Selon l'invention, on utilise en outre sur au moins une portion de la gaine textile un fil textile thermocollant.

On peut utiliser par exemple des fils thermocollants utilisés couramment en tissage pour la confection d'étiquettes, de pièces de tissu thermocollant, d'ourlets ...

Compte tenu du support plastique, généralement en polyamide, sur lequel est destinée à être appliquée la gaine de textile de protection, il est préférable que le fil thermocollant soit fusible à une température comprise entre 60 et 140°C.

On peut à titre d'exemple utilisé un fil thermocollant réalisé en un matériau thermodurcissable, du type polyester et/ou polyamide.

Un fil thermocollant de type polyester et co-polyamide est par exemple commercialisé sous la dénomination GRILON^{®}.

Bien entendu d'autres fils thermocollants peuvent être utilisés par assemblage de fil thermocollant et de fil non thermocollant en différentes proportions.

En particulier, on peut utiliser un fil commercialisé sous la dénomination FILIX^{®} composé de :
- 6% d'élasthanne
- 40,5 % de fil thermocollant du type GRILON^{®}, et
- 53,5 % de polyamide texturé.

Le fil thermocollant est entrelacé dans la structure textile de la gaine sur au moins une portion transversale de la gaine tubulaire de manière à ce qu'au moins une portion annulaire de cette gaine présente une structure textile thermocollante.

De préférence, lorsque seule une portion de la gaine tubulaire comprend un fil textile thermocollant, on utilise un fil thermocollant du type FILIX^{®}.

Ce fil FILIX^{®} ne comprend que 50 % de matière fusible, de telle sorte que les autres composants du FILIX^{®} ne fondent pas aux températures utilisées. On conserve ainsi après collage une certaine résistance mécanique et le fil FILIX^{®} peut être tricoté seul sur une portion de la gaine.

En revanche, lorsque la gaine tubulaire comprend sur toute sa longueur un fil textile thermocollant, il est avantageux d'utiliser un fil thermocollant du type GRILON^{®}.

Ce fil GRILON^{®} est entièrement fusible. Il doit être par conséquent tricoté en même temps qu'un autre fil non fusible.

Dans ce mode de réalisation, le textile utilisé par la gaine tubulaire est un tricot du type jersey. Pour permettre l'adjonction d'un fil textile thermocollant dans la structure textile tricotée à partir de monofilaments en polyester ou polyamide, et éventuellement de multifilaments, plusieurs techniques de tricotage peuvent être utilisées.

En particulier, lorsque le fil textile thermocollant s'étend sur l'intégralité de la gaine, le fil thermocollant est molletonné. Le fil thermocollant est utilisé dans le tricotage circulaire, accroché dans le fond et ne maille pas avec la structure textile tricotée.

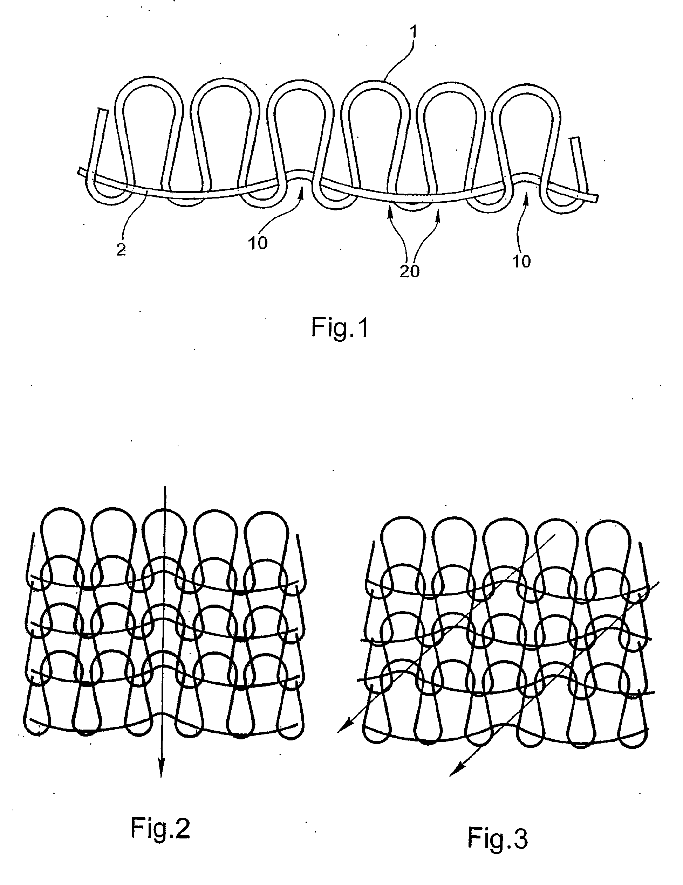

Un exemple de molleton est décrit sur les figures 1 à 3.

Sur ces exemples, le monofilament utilisé pour le tricotage de la structure textile est référencé 1 et le fil textile thermocollant est référencé 2.

Il s'agit d'un molleton 1/2 dans lequel sont alternés une maille chargée 10 et deux mailles flottées 20.

Un procédé de tricotage circulaire jersey présente l'avantage d'obtenir un produit tubulaire sans couture. Le principe du fil de molleton permet de déposer parfaitement le fil thermocollant à l'intérieur de la gaine textile.

Dans l'exemple de réalisation, le flotté du molleton est réalisé sur deux aiguilles. Bien entendu il pourrait également être réalisé sur une ou trois aiguilles. On parle alors de molleton 1/1 ou 1/3.

Ce procédé de flotté du molleton permet de réaliser une économie substantielle de fil thermocollant utilisé dans la structure textile.

On a illustré différents types de flotté sur deux aiguilles sur les figures 2 et 3. A la figure 2, la maille chargée est toujours réalisée sur la même aiguille alors que sur la figure 3, la maille chargée est décalée d'une aiguille à chaque rang de tricot. De préférence, on utilise ce dernier mode de tricotage, appelé flotté sur deux aiguilles façon "diamant", permettant de répartir la surface apparente du fil thermocollant sur la face intérieure de la gaine textile.

Bien entendu, d'autres procédés pourrait être utilisés du type vanisage permettant d'obtenir deux faces de tissu différentes, chacune avec un type de fil, et par exemple une face dans un fil thermocollant et une face dans un monofilament.

De préférence, on choisira la jauge du cylindre de la machine, les aiguilles et le réglage de la serre de manière à obtenir un maillage dense.

Une structure tricotée dense permet d'offrir une meilleure tenue à l'abrasion, une gaine cylindrique relativement rigide, favorisant ainsi son montage sur un tuyau cylindrique.

En outre, il est avantageux de tricoter une gaine textile de diamètre légèrement supérieur à celui du support plastique de manière à favoriser le montage de la gaine sur son support.

Ce type de gaine tricoté présente peu d'élasticité longitudinale tout en conservant un léger pouvoir d'expansion dans son diamètre.

D'autres types de tricotage peuvent être utilisés pour réaliser une gaine tubulaire, en particulier lorsque seulement une ou les deux portions d'extrémités de la gaine tubulaire comprennent un fil textile thermocollant.

On peut alors utilisé un procédé de tricotage circulaire jersey mettant en oeuvre un rayeur, permettant de changer automatiquement le fil tricoté.

En pratique, une certaine longueur correspondant à une première portion d'extrémité de la gaine tubulaire est tricotée en fil thermocollant monofilament de type polyester ou polyamide.

Cette première portion est suivie d'une longueur de tricot jersey réalisé uniquement à partir de monofilaments, et éventuellement de multifilaments, pour obtenir une gaine tubulaire présentant des caractéristiques de protection mécanique.

Cette longueur de gaine est elle-même suivie à nouveau d'une longueur de tricot jersey mettant en oeuvre un fil thermocollant sur une portion qui peut correspondre soit à la première extrémité d'une deuxième gaine tubulaire à tricoter, soit à la seconde extrémité de la première gaine tubulaire déjà tricotée. Une unique portion mettant en oeuvre un fil thermocollant peut être tricotée pour venir ensuite constituer, après coupure de la gaine tricotée au niveau de cette portion, d'une part la seconde extrémité d'une première gaine tubulaire et la première extrémité d'une deuxième gaine tubulaire.

Ce procédé de tricotage est surtout valable pour de grande longueur de gaine car le changement de fil pour réaliser chacune des portions nécessite un arrêt de la machine à tricoter.

Par contre, en comparaison du premier procédé décrit mettant en oeuvre un tricot molleton, ce deuxième mode de tricotage permet de réaliser une économie non négligeable de fil thermocollant.

Bien entendu, on n'a décrit ici que des exemples de réalisation d'une gaine mettant en oeuvre des machines à tricoter circulaires.

Toutefois, la gaine tubulaire pourrait être également réalisée à plat puis fermer par une couture sur ces bords longitudinaux.

En outre, l'invention n'est pas limitée à la réalisation d'une gaine tubulaire et peut également s'appliquer à tout autre type de structure textile de protection mécanique.

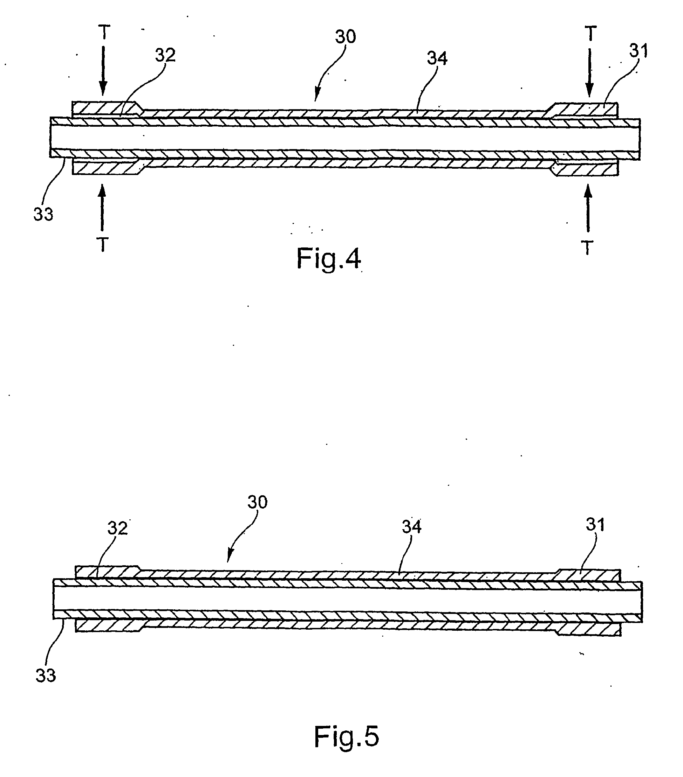

On va décrire à présent en référence aux figures 4 et 5 un exemple d'utilisation d'une gaine tubulaire textile conforme à l'invention.

Dans ce mode de réalisation, la gaine textile 30 se présente sous forme tubulaire comprenant deux portions d'extrémités 31, 32 réalisées à partir d'un fil textile thermocollant, soit par un fil de molleton, soit par un tricotage du fil thermocollant selon un procédé de jersey tubulaire ou un procédé de tricot côte.

Comme déjà expliqué précédemment, afin de faciliter la mise en place de la gaine 30 sur un tuyau plastique 33, le diamètre intérieur de la gaine 30 est légèrement supérieur au diamètre extérieur du tuyau 33.

Grâce à l'action de la chaleur illustrée par les flèches T sur la figure 5 au niveau des portions d'extrémités 31, 32 de la gaine 30, on obtient la fusion du fil thermocollant pour permettre son collage sur le tuyau plastique 33.

De préférence, les monofilaments choisis présentent un léger retrait en température lors du processus de collage. Les monofilaments utilisés dans les portions d'extrémités 31, 32 se rétractent, de telle sorte qu'une pression suffisante de la gaine tubulaire 30 sur le tuyau plastique 33 est obtenue, permettant de faciliter le collage.

Cet effet de rétraction est illustré sur les figures 4 et 5, avec amplification de la rétractation des portions d'extrémités 31, 32 par rapport à la portion centrale principale 34 de la gaine tubulaire afin de faciliter la compréhension de l'invention.

De préférence, les fils thermocollants utilisés ont une couleur qui se modifie lors de la fusion du fil de telle sorte que l'opérateur qui réalise le collage peut visualiser à l'oeil nu la fusion du fil thermocollant et le bon collage de la gaine tubulaire sur le support plastique.

A titre d'exemples, le fil thermocollant peut être blanc et devenir noir ou transparent après fusion.

On obtient ainsi une gaine textile pouvant être immobilisée sur un tuyau plastique, du type tuyau en polyamide relativement glissant.

En outre, lorsque la gaine tubulaire conforme à l'invention est utilisée dans un tuyau d'acheminement du carburant entre un réservoir et le moteur d'un véhicule automobile, l'opération de collage de la gaine textile de protection mécanique peut être intégrée lors d'un cycle de formage des tuyaux.

Bien entendu, de nombreuses modifications peuvent être apportées aux exemples de réalisation décrit précédemment sans sortir du cadre de l'invention.

En particulier, la gaine tubulaire pourrait ne comporter qu'une seule portion comprenant un fil textile thermocollant, par exemple à l'une de ses extrémités ou éventuellement en son milieu.

La gaine textile pourrait également assurer un rôle de protection thermique.

## Revendications

1. Gaine textile tubulaire de protection d'un tuyau plastique, le textile comprenant des monofilaments thermorétractables, en polyester ou polyamide, **caractérisée en ce que** la structure textile est un tricot et **en ce qu'**au moins une portion (31, 32) de la structure textile (30) comprend un fil textile thermocollant (2).

2. Gaine textile tubulaire conforme à la revendication 1, **caractérisée en ce que** le fil thermocollant (2) est fusible à une température comprise entre 60 et 140°C.

3. Gaine textile tubulaire conforme à l'une des revendications 1 ou 2, **caractérisée en ce que** le fil thermocollant (2) est réalisé en un matériau thermodurcissable.

4. Gaine textile tubulaire conforme à l'une des revendications 1 à 3, **caractérisée en ce que** le fil thermocollant est du type polyester et/ou polyamide.

5. Gaine textile tubulaire conforme à l'une des revendications 1 à 4, **caractérisée en ce qu'**elle comprend en outre des multifilaments.

6. Gaine textile tubulaire conforme à l'une des revendications 1 à 5, **caractérisée en ce que** ladite portion (31, 32) comprenant un fil thermocollant constitue une extrémité de la gaine tubulaire (30).

7. Gaine textile tubulaire conforme à l'une des revendications 1 à 5, **caractérisée en ce que** les deux portions d'extrémité (31, 32) de la gaine tubulaire (30) comprennent un fil textile thermocollant (2).

8. Gaine textile tubulaire conforme à l'une des revendications 1 à 5, **caractérisée en ce que** la gaine tubulaire (30) comprend sur toute sa longueur un fil textile thermocollant (2).

9. Gaine textile tubulaire conforme à l'une des revendications 1 à 8, **caractérisée en ce que** la structure textile est un tricot jersey.

10. Gaine textile tubulaire conforme à l'une des revendications 1 à 8, **caractérisée en ce que** la structure textile est un tricot côte.

11. Gaine textile tubulaire conforme à l'une des revendications 1 à 9, **caractérisée en ce que** le fil thermocollant (2) est molletonné dans la structure textile tricotée.

12. Gaine textile tubulaire conforme à l'une des revendications 1 à 9, **caractérisée en ce que** le fil thermocollant (2) est entrelacé dans la structure textile sur au moins une portion transversale de la gaine textile tubulaire.

13. Ensemble comprenant un tuyau plastique et une gaine textile tubulaire conforme à l'une des revendications 1 à 12, **caractérisée en ce que** le diamètre intérieur de la gaine est légèrement supérieur au diamètre extérieur du tuyau plastique.

## Claims

1. A tubular textile sheath for protecting a plastic pipe, the textile comprising heat-shrinkable monofilaments, of polyester or polyamide, **characterized in that** the textile structure is knitted, and **in that** at least one portion (31, 32) of the textile structure (30) comprises a heat-bonding textile yarn (2).

2. The tubular textile sheath as claimed in claim 1, **characterized in that** the heat-bonding yarn (2) melts at a temperature between 60°C and 140°C.

3. The tubular textile sheath as claimed in either of claims 1 and 2, **characterized in that** the heat-bonding yarn (2) is made of a thermosetting material.

4. The tubular textile sheath as claimed in one of claims 1 to 3, **characterized in that** the heat-bonding yarn is of the polyester and/or polyamide type.

5. The tubular textile sheath as claimed in one of claims 1 to 4, **characterized in that** it further includes multifilaments.

6. The tubular textile sheath as claimed in one of claims 1 to 5, **characterized in that** said portion (31, 32) comprising a heat-bonding yarn constitutes one end of the tubular sheath (30).

7. The tubular textile sheath as claimed in one of claims 1 to 5, **characterized in that** both end portions (31, 32) of the tubular sheath (30) comprise a heat-bonding textile yarn (2).

8. The tubular textile sheath as claimed in one of claims 1 to 5, **characterized in that** the tubular sheath (30) comprises a heat-bonding textile yarn (2) over its entire length.

9. The tubular textile sheath as claimed in one of claims 1 to 8, **characterized in that** the textile structure is a jersey knit.

10. The tubular textile sheath as claimed in one of claims 1 to 8, **characterized in that** the textile structure is a rib knit.

11. The tubular textile sheath as claimed in one of claims 1 to 9, **characterized in that** the heat-bonding yarn (2) is a quilting yarn in the knitted textile structure.

12. The tubular textile sheath as claimed in one of claims 1 to 9, **characterized in that** the heat-bonding yarn (2) is interlaced in the textile structure over at least a transverse portion of the tubular textile sheath.

13. Assembly comprising a plastic pipe and a tubular textile sheath as claimed in one of claims 1 to 12, **characterized in that** the inside diameter of the sheath is slightly greater than the outside diameter of the plastic pipe.

## Patentansprüche

1. Schlauchförmige textile Schutzumhüllung für ein Kunststoffrohr, wobei das Textil wärmeschrumpfbare Monofilamente aus Polyester oder Polyamid umfasst, **dadurch gekennzeichnet, dass** das textile Gefüge ein Wirkgewebe ist, und dass zumindest ein Abschnitt (31, 32) der textilen Struktur (30) einen textilen Heißkleberfaden (2) umfasst.

2. Schlauchförmige textile Umhüllung nach Anspruch 1, **dadurch gekennzeichnet, dass** der Heißkleberfaden (2) bei einer Temperatur zwischen 60 und 140°C schmelzbar ist.

3. Schlauchförmige textile Umhüllung nach einem der Ansprüche 1 oder 2, **dadurch gekennzeichnet, dass** der Heißkleberfaden (2) aus einem wärmehärtenden Material hergestellt ist.

4. Schlauchförmige textile Umhüllung nach einem der Ansprüche 1 bis 3, **dadurch gekennzeichnet, dass** der Heißkleberfaden von der Art Polyester und/oder Polyamid ist.

5. Schlauchförmige textile Umhüllung nach einem der Ansprüche 1 bis 4, **dadurch gekennzeichnet, dass** sie außerdem Multifilamente umfasst.

6. Schlauchförmige textile Umhüllung nach einem der Ansprüche 1 bis 5, **dadurch gekennzeichnet, dass** der Abschnitt (32, 32), der einen Heißkleberfaden umfasst, ein Ende der schlauchförmigen Umhüllung (30) bildet.

7. Schlauchförmige textile Umhüllung nach einem der Ansprüche 1 bis 5, **dadurch gekennzeichnet, dass** die beiden Endabschnitte (31, 32) der schlauchförmigen Umhüllung (30) einen textilen Heißkleberfaden (2) umfassen.

8. Schlauchförmige textile Umhüllung nach einem der Ansprüche 1 bis 5, **dadurch gekennzeichnet, dass** die schlauchförmige Umhüllung (30) über ihre gesamte Länge einen textilen Heißkleberfaden (2) umfasst.

9. Schlauchförmige textile Umhüllung nach einem der Ansprüche 1 bis 8, **dadurch gekennzeichnet, dass** die textile Struktur ein Jersey-Gewirk ist.

10. Schlauchförmige textile Umhüllung nach einem der Ansprüche 1 bis 8, **dadurch gekennzeichnet, dass** die textile Struktur eine Rippware ist.

11. Schlauchförmige textile Umhüllung nach einem der Ansprüche 1 bis 9, **dadurch gekennzeichnet, dass** der Heißkleberfaden (2) die textile Wirkstruktur unterfüttert.

12. Schlauchförmige textile Umhüllung nach einem der Ansprüche 1 bis 9, **dadurch gekennzeichnet, dass** Heißkleberfaden (2) über mindestens einen querverlaufenden Abschnitt der schlauchförmigen textilen Umhüllung in die textile Struktur eingewirkt ist.

13. Einheit, umfassend ein Kunststoffrohr und eine schlauchförmige textile Umhüllung nach einem der Ansprüche 1 bis 12, **dadurch gekennzeichnet, dass** der Innendurchmesser der Umhüllung etwas größer ist als der Außendurchmesser des Kunststoffrohrs.
